# EUROPEAN PATENT APPLICATION

(11) **EP 4 668 005 A1**
(43) Date of publication of application: **24.12.2025**
(21) Application number: 24792315.4
(22) Date of filing: 26.01.2024
(51) Int. Cl.: G02F 1/1333, G02F 1/13

(54) **PHASE MODULATION MODULE**

(30) Priority: 21.04.2023 JP 2023069885; 20.07.2023 JP 2023118048; 29.11.2023 JP 2023201573
(71) Applicant: Hamamatsu Photonics K.K., Hamamatsu-shi, Shizuoka 435-8558 (JP)
(72) Inventor: NOZAWA, Naoki, Hamamatsu-shi, Shizuoka 435-8558 (JP); ASAINE, Hirokazu, Hamamatsu-shi, Shizuoka 435-8558 (JP); FUKUJIN, Jumpei, Hamamatsu-shi, Shizuoka 435-8558 (JP); NAGATA, Mikio, Hamamatsu-shi, Shizuoka 435-8558 (JP); TAKAHASHI, Takumi, Hamamatsu-shi, Shizuoka 435-8558 (JP); AKIZAWA, Yoshiki, Hamamatsu-shi, Shizuoka 435-8558 (JP); MURAMATSU, Yuma, Hamamatsu-shi, Shizuoka 435-8558 (JP)
(74) Representative: Grünecker Patent- und Rechtsanwälte PartG mbB
(86) International application number: PCT/JP2024/002436
(87) International publication number: WO 2024/219039

(57) **Abstract**

A first holding portion includes a first side wall portion facing a first side surface of a phase modulation element, and a first protruding portion extending from the first side wall portion toward the phase modulation element. A second holding portion includes a second side wall portion facing a second side surface of the phase modulation element. An end surface of the first protruding portion faces the phase modulation element. A potting material connects an end surface of the first protruding portion and the first side surface to each other in a first space formed by the first side surface of the phase modulation element and the first side wall portion and the first protruding portion of the first holding portion. Air is disposed in at least a part of an overlapping portion of the first space overlapping the first protruding portion when view ed from a predetermined direction.

## Description

### Technical Field

One aspect of the present disclosure relates to a phase modulation module.

### Background Art

An optical element package described in Patent Literature 1 includes a housing formed by a bottom plate and a side plate, and a reflection-type optical element accommodated in the housing. A gap between the optical element and the housing is filled with a sealing resin, and a side surface and a back surface of the optical element are covered with the sealing resin.

### Citation List

### Patent Literature

Patent Literature 1: Japanese Unexamined Patent Publication No. 2017-116735

### Summary of Invention

### Technical Problem

In the configuration as described above, a potting material (sealing resin) may protrude onto an effective region of a surface of the optical element during manufacturing, transportation, use, or the like. Furthermore, in a case where the optical element is a phase modulation element, for example, in a case where light having a large average light amount is modulated by the phase modulation element, there is a possibility that a change in characteristics or damage (for example, decomposition or carbonization of liquid crystal) associated with a temperature rise may occur due to an increase in a heat generation amount. In addition, when a temperature rises, a plane shape of the phase modulation element changes, and there is a possibility that distortion to an extent that cannot be corrected occurs in a phase pattern input to the phase modulation element. Therefore, improvement of heat dissipation (light resistance) is required.

Therefore, an object of one aspect of the present disclosure is to provide a phase modulation module capable of suppressing protrusion of a potting material to an effective region of a phase modulation element and improving heat dissipation.

### Solution to Problem

A phase modulation module according to one aspect of the present disclosure is [1] "a phase modulation module including: a base portion; a reflection-type phase modulation element disposed on the base portion; a first holding portion and a second holding portion disposed on the base portion such that the phase modulation element is located between the first holding portion and the second holding portion when viewed from a predetermined direction; and a potting material that connects the phase modulation element and the first holding portion to each other and connects the phase modulation element and the second holding portion to each other, in which when a side on which the phase modulation element is located with respect to the base portion in the predetermined direction is defined as a first side and a side opposite to the first side is defined as a second side, the phase modulation element includes: a circuit board disposed on the base portion, a liquid crystal layer disposed on the first side with respect to the circuit board, and a cover member formed of a light transmissive material in a plate shape and disposed on the first side with respect to the liquid crystal layer, the first holding portion includes a first side wall portion facing a first side surface of the phase modulation element, and a first protruding portion extending from the first side wall portion toward the phase modulation element, the second holding portion includes a second side wall portion facing a second side surface opposite to the first side surface of the phase modulation element, an end surface of the first protruding portion faces the phase modulation element, the potting material connects the end surface of the first protruding portion and the first side surface to each other in a first space formed by the first side surface of the phase modulation element and the first side wall portion and the first protruding portion of the first holding portion, and air is disposed in at least a part of a portion of the first space overlapping the first protruding portion when viewed from the predetermined direction".
[1] In the phase modulation module, the first holding portion has the first protruding portion extending from the first side wall portion toward the phase modulation element, the potting material connects the end surface of the first protruding portion and the first side surface of the phase modulation element to each other in the first space, and air is disposed in at least a part of the portion of the first space overlapping the first protruding portion when viewed from the predetermined direction. By disposing the air in the first space between the phase modulation element and the first holding portion in this manner, the air functions as a buffer for the potting material, and for example, as compared with a case where the potting material is disposed in the entire first space, it is possible to suppress the potting material from protruding to the effective region of the phase modulation element during manufacturing, transportation, use, or the like. In particular, in the phase modulation module of [1], since the first holding portion has the first protruding portion, a wide space for disposing air can be secured between the first protruding portion and the base portion, and the protrusion of the potting material to the effective region of the phase modulation element can be effectively suppressed. In addition, in the phase modulation module of [1], the potting material connects the end surface of the first protruding portion of the first holding portion and the first side surface of the phase modulation element to each other in the first space, and air is disposed in at least a part of the portion of the first space overlapping the first protruding portion when viewed from a predetermined direction. As a result, a thermal path via the potting material can be formed at a portion where a distance between the first holding portion and the phase modulation element is short, and heat generated in the phase modulation element can be efficiently transferred to the holding portion via the potting material. Therefore, according to the phase modulation module of [1], the protrusion of the potting material to the effective region of the phase modulation element can be suppressed, and heat dissipation can be improved.

A phase modulation module according to one aspect of the present disclosure is [2] "a phase modulation module including: a base portion; a reflection-type phase modulation element disposed on the base portion; a first holding portion and a second holding portion disposed on the base portion such that the phase modulation element is located between the first holding portion and the second holding portion when viewed from a predetermined direction; and a potting material that connects the phase modulation element and the first holding portion to each other and connects the phase modulation element and the second holding portion to each other, in which when a side on which the phase modulation element is located with respect to the base portion in the predetermined direction is defined as a first side and a side opposite to the first side is defined as a second side, the phase modulation element includes: a circuit board disposed on the base portion, a liquid crystal layer disposed on the first side with respect to the circuit board, and a cover member formed of a light transmissive material in a plate shape and disposed on the first side with respect to the liquid crystal layer, the first holding portion includes a first side wall portion facing a first side surface of the phase modulation element, the second holding portion includes a second side wall portion facing a second side surface opposite to the first side surface of the phase modulation element, the cover member includes a first protruding portion protruding with respect to the circuit board when viewed from the predetermined direction, an end surface of the first protruding portion faces the first holding portion, the potting material connects the end surface of the first protruding portion and the first holding portion to each other in a first space formed by the first side surface of the phase modulation element and the first side wall portion of the first holding portion, air is disposed in at least a part of an overlapping portion of the first space overlapping the first protruding portion when viewed from the predetermined direction, and an edge of an opening of the overlapping portion on the second side at a position corresponding to the end surface of the first protruding portion is located on the second side with respect to a surface of the circuit board on the first side".

In the phase modulation module of [2], the cover member has the first protruding portion protruding with respect to the circuit board, the potting material connects the end surface of the first protruding portion and the first holding portion to each other in the first space, and air is disposed in at least a part of the overlapping portion of the first space overlapping the first protruding portion when viewed from the predetermined direction. By disposing the air in the first space between the phase modulation element and the first holding portion in this manner, the air functions as a buffer for the potting material, and for example, as compared with a case where the potting material is disposed in the entire first space, it is possible to suppress the potting material from protruding to the effective region of the phase modulation element during manufacturing, transportation, use, or the like. In particular, in the phase modulation module of [2], since the cover member has the first protruding portion, a wide space for disposing air can be secured between the first protruding portion and the base portion, and the protrusion of the potting material to the effective region of the phase modulation element can be effectively suppressed. Further, in the phase modulation module of [2], the edge of the opening of the overlapping portion on the second side at the position corresponding to the end surface of the first protruding portion is located on the second side with respect to the surface of the circuit board on the first side. This makes it possible to secure a wide length of the opening of the overlapping portion in the predetermined direction. As a result, the potting material easily enters the overlapping portion, and the protrusion of the potting material to the effective region of the phase modulation element can be more effectively suppressed. In the phase modulation module of [2], the potting material connects the end surface of the first protruding portion and the first holding portion to each other in the first space, and air is disposed in at least a part of the overlapping portion of the first space overlapping the first protruding portion when viewed from the predetermined direction. As a result, a thermal path via the potting material can be formed at a portion where a distance between the first holding portion and the phase modulation element is short, and heat generated in the phase modulation element can be efficiently transferred to the holding portion via the potting material. Therefore, according to the phase modulation module of [2], the protrusion of the potting material to the effective region of the phase modulation element can be suppressed, and heat dissipation can be improved.

The phase modulation module according to one aspect of the present disclosure may be [3] "the phase modulation module according to [1] or [2], in which the potting material is separated from the base portion by the air being disposed between the potting material and the base portion". In this case, it is possible to effectively achieve the above-described action and effect that the thermal path via the potting material can be formed at the portion where the distance between the first holding portion and the phase modulation element is short.

The phase modulation module according to one aspect of the present disclosure may be [4] "the phase modulation module according to any one of [1] to [3], in which the air is in contact with the first side surface of the phase modulation element and the first side wall portion of the first holding portion". In this case, it is possible to effectively achieve the above-described action and effect that the thermal path via the potting material can be formed at the portion where the distance between the first holding portion and the phase modulation element is short.

The phase modulation module according to one aspect of the present disclosure may be [5] "the phase modulation module according to any one of [1] to [4], in which a thermal conductivity of the potting material is 0.5 W/(m·K) or more". In this case, the heat generated in the phase modulation element can be more efficiently transferred to the holding portion.

The phase modulation module according to one aspect of the present disclosure may be [6] "the phase modulation module according to any one of [1] to [5], in which the first holding portion and the second holding portion are formed of a metal material". In this case, the heat transferred to the holding portion can be efficiently transferred to the base portion.

The phase modulation module according to one aspect of the present disclosure may be [7] "the phase modulation module according to any one of [1] to [6], in which the first holding portion and the second holding portion are connected to each other by a top wall portion defining an opening overlapping at least a part of the phase modulation element when viewed from the predetermined direction". In this case, an amount of the potting material can be restricted by restricting an arrangement space of the potting material by the top wall portion, and the heat generated in the phase modulation element can be efficiently transferred to the holding portion via a small amount of the potting material.

The phase modulation module according to one aspect of the present disclosure may be [8] "the phase modulation module according to any one of [1] to [7], in which the potting material is in contact with at least the circuit board in the first space". In this case, the heat generated in the liquid crystal layer and transferred to the circuit board can be transferred to the holding portion via the potting material.

The phase modulation module according to one aspect of the present disclosure may be [9] "the phase modulation module according to any one of [1] to [8], in which in the first space, a volume of the air is larger than a volume of the potting material". In this case, it is possible to more effectively suppress the protrusion of the potting material to the effective region of the phase modulation element. In addition, it is possible to effectively achieve the above-described function and effect that the thermal path via the potting material can be formed at the portion where the distance between the first holding portion and the phase modulation element is short.

The phase modulation module according to one aspect of the present disclosure may be [10] "the phase modulation module according to [1], in which the second holding portion further includes a second protruding portion extending from the second side wall portion toward the phase modulation element, an end surface of the second protruding portion faces the phase modulation element, the potting material connects the end surface of the second protruding portion and the second side surface to each other in a second space formed by the second side surface of the phase modulation element and the second side wall portion and the second protruding portion of the second holding portion, and air is disposed in at least a part of a portion of the second space overlapping the second protruding portion when viewed from the predetermined direction". In this case, it is possible to more effectively suppress the protrusion of the potting material to the effective region of the phase modulation element. In addition, a thermal path via the potting material can be formed at a portion where a distance between the second holding portion and the phase modulation element is short, and the heat generated in the phase modulation element can be efficiently transferred to the holding portion via the potting material.

The phase modulation module according to one aspect of the present disclosure may be [11] "the phase modulation module according to [1] or [10], in which the cover member has a protruding portion protruding with respect to the circuit board when viewed from the predetermined direction, an end surface of the protruding portion of the cover member faces the first holding portion, and the potting material connects the end surface of the first protruding portion and the end surface of the protruding portion of the cover member to each other in the first space". In this case, the distance between the first holding portion and the phase modulation element can be further shortened. Then, by forming the thermal path via the potting material at the portion, the heat generated in the phase modulation element can be more efficiently transferred to the holding portion via the potting material.

The phase modulation module according to one aspect of the present disclosure may be [12] "the phase modulation module according to any one of [1], [10], and [11], in which when a portion of the first space overlapping the first protruding portion when viewed from the predetermined direction is an overlapping portion, an edge of an opening of the overlapping portion on the second side at a position corresponding to the end surface of the first protruding portion is located on the second side with respect to a surface of the circuit board on the first side". In this case, it is possible to secure a wide length of the opening of the overlapping portion in the predetermined direction. As a result, the potting material easily enters the overlapping portion, and the protrusion of the potting material to the effective region of the phase modulation element can be more effectively suppressed.

The phase modulation module according to one aspect of the present disclosure may be [13] "the phase modulation module according to [2], in which the cover member further includes a second protruding portion protruding with respect to the circuit board when viewed from the predetermined direction, an end surface of the second protruding portion faces the second holding portion, the potting material connects the end surface of the second protruding portion and the second holding portion to each other in a second space formed by the second side surface of the phase modulation element and the second side wall portion of the second holding portion, and air is disposed in at least a part of a portion of the second space overlapping the second protruding portion when viewed from the predetermined direction". In this case, it is possible to more effectively suppress the protrusion of the potting material to the effective region of the phase modulation element. In addition, a thermal path via the potting material can be formed at a portion where a distance between the second holding portion and the phase modulation element is short, and the heat generated in the phase modulation element can be efficiently transferred to the holding portion via the potting material.

The phase modulation module according to one aspect of the present disclosure may be [14] "the phase modulation module according to [2] or [13], in which the first holding portion further includes a protruding portion extending from the first side wall portion toward the phase modulation element, an end surface of the protruding portion of the first holding portion faces the phase modulation element, and the potting material connects the end surface of the first protruding portion and the end surface of the protruding portion of the first holding portion to each other in the first space". In this case, the distance between the first holding portion and the phase modulation element can be further shortened. Then, by forming the thermal path via the potting material at the portion, the heat generated in the phase modulation element can be more efficiently transferred to the holding portion via the potting material.

The phase modulation module according to one aspect of the present disclosure may be [15] "the phase modulation module according to any one of [2], [13], and [14], in which a length of the opening of the overlapping portion in the predetermined direction is 1/2 or more of a maximum length of the overlapping portion in the predetermined direction". In this case, the potting material more easily enters the overlapping portion, and the protrusion of the potting material to the effective region of the phase modulation element can be more effectively suppressed.

A phase modulation module according to one aspect of the present disclosure is [16] "a phase modulation module including: a base portion; a reflection-type phase modulation element disposed on the base portion; a first holding portion and a second holding portion disposed on the base portion such that the phase modulation element is located between the first holding portion and the second holding portion when viewed from a predetermined direction; and a potting material that connects the phase modulation element and the first holding portion to each other and connects the phase modulation element and the second holding portion to each other, in which when a side on which the phase modulation element is located with respect to the base portion in the predetermined direction is defined as a first side and a side opposite to the first side is defined as a second side, the phase modulation element includes: a circuit board disposed on the base portion, a liquid crystal layer disposed on the first side with respect to the circuit board, and a cover member formed of a light transmissive material in a plate shape and disposed on the first side with respect to the liquid crystal layer, and including the following configuration (a) or (b) in which:
(a) the first holding portion includes a first side wall portion facing a first side surface of the phase modulation element, and a first protruding portion extending from the first side wall portion toward the phase modulation element, the second holding portion includes a second side wall portion facing a second side surface opposite to the first side surface of the phase modulation element, an end surface of the first protruding portion faces the phase modulation element, the potting material is disposed in a first space formed by the first side surface of the phase modulation element and the first side wall portion and the first protruding portion of the first holding portion, and connects the end surface of the first protruding portion and the first side surface to each other in the first space, and air is disposed in at least a part of a portion of the first space overlapping the first protruding portion when viewed from the predetermined direction, and
(b) the first holding portion includes a first side wall portion facing a first side surface of the phase modulation element, the second holding portion includes a second side wall portion facing a second side surface opposite to the first side surface of the phase modulation element, the cover member includes a first protruding portion protruding with respect to the circuit board when viewed from the predetermined direction, an end surface of the first protruding portion faces the first holding portion, the potting material connects the end surface of the first protruding portion and the first holding portion to each other in a first space formed by the first side surface of the phase modulation element and the first side wall portion of the first holding portion, air is disposed in at least a part of an overlapping portion of the first space overlapping the first protruding portion when viewed from the predetermined direction, and an edge of an opening of the overlapping portion on the second side at a position corresponding to the end surface of the first protruding portion is located on the second side with respect to a surface of the circuit board on the first side". According to the phase modulation module of [16], the protrusion of the potting material to the effective region of the phase modulation element can be suppressed and the heat dissipation can be improved for the reason described above.

### Advantageous Effects of Invention

According to one aspect of the present disclosure, it is possible to provide a phase modulation module capable of suppressing protrusion of a potting material to an effective region of a phase modulation element and improving heat dissipation.

### Brief Description of Drawings

FIG. 1 is a perspective view of a phase modulation module according to an embodiment.
FIG. 2 is a perspective view in which a housing portion is removed from FIG. 1.
FIG. 3 is a cross-sectional view taken along line III-III of FIG. 1.
FIG. 4 is a cross-sectional view taken along line IV-IV of FIG. 1.
FIG. 5(a) is a partially enlarged view of FIG. 4 illustrating a first space, and FIG. 5(b) is a partially enlarged view of FIG. 4 illustrating a second space.
FIG. 6(a) is a plan view of a wiring substrate and a phase modulation element, and FIG. 6(b) is a side view of the wiring substrate and the phase modulation element.
FIG. 7(a) is a side view of a holding portion as viewed from an upper side in FIG. 7(b), FIG. 7(b) is a bottom view of the holding portion, and FIG. 7(c) is a side view of the holding portion as viewed from a lower side in FIG. 7(b).
FIG. 8(a) is a cross-sectional view of a phase modulation module of a first modification, and FIG. 8(b) is a cross-sectional view of a phase modulation module of a second modification.
FIG. 9(a) is a cross-sectional view of a phase modulation module of a third modification, and FIG. 9(b) is a plan view of the phase modulation module of the third modification.
FIG. 10(a) is a cross-sectional view of a phase modulation module of a fourth modification, and FIG. 10(b) is a plan view of the phase modulation module of the fourth modification.
FIG. 11(a) is a plan view of a phase modulation module of a fifth modification, FIG. 11(b) is a plan view of a phase modulation module of a sixth modification, and FIG. 11(c) is a plan view of a phase modulation module of a seventh modification.

### Description of Embodiments

Hereinafter, an embodiment of the present disclosure will be described in detail with reference to the drawings. The following description will use the same reference numerals for the same or equivalent elements, and repeated descriptions will be omitted.

### [Phase Modulation Module]

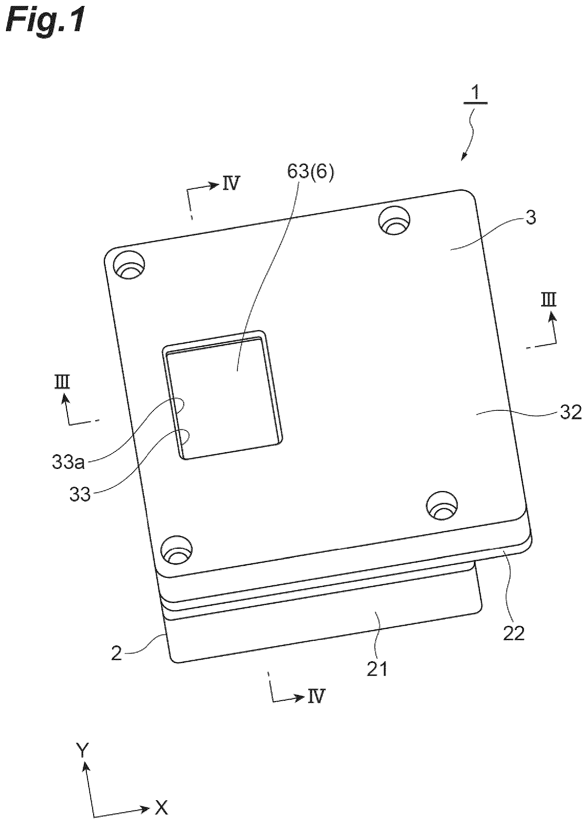

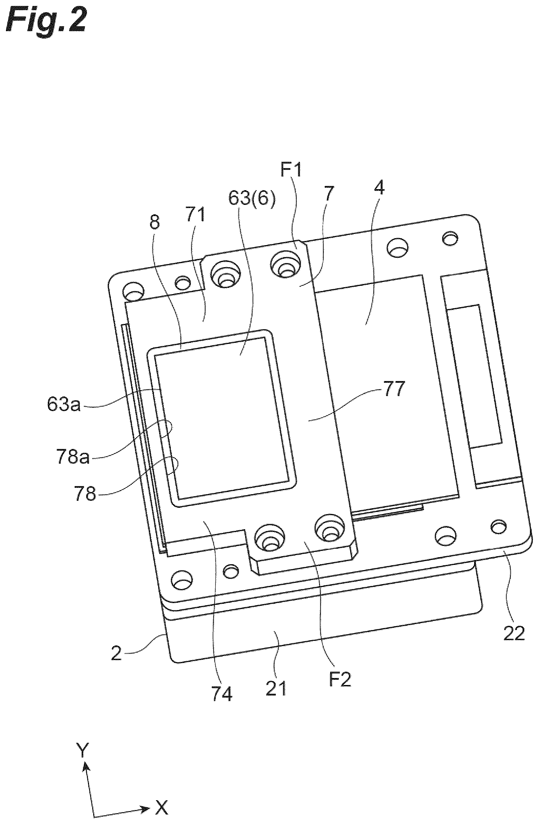

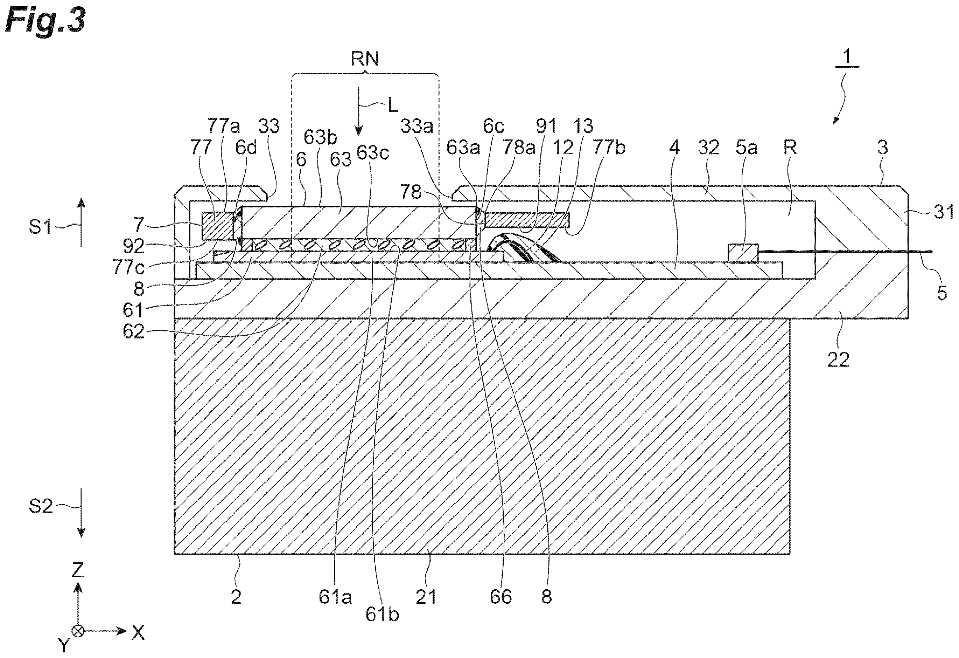

As illustrated in FIGS. 1 to 7, the phase modulation module 1 includes a base portion 2, a housing portion 3 (outer cover), a first wiring substrate 4, a second wiring substrate 5, a phase modulation element 6, a holding portion 7 (inner cover), and a potting material 8. The phase modulation element 6 includes a circuit board 61, a liquid crystal layer 62, and a cover member 63. In the phase modulation module 1, laser light L is incident on the phase modulation element 6 and reflected. At this time, a phase of the laser light L is modulated by the liquid crystal layer 62. Hereinafter, a description will be given with reference to an X direction, a Y direction (direction perpendicular to the X direction), and a Z direction (direction perpendicular to the X direction and the Y direction) (predetermined direction) illustrated in each drawing. A side (upper side in FIG. 3) on which the phase modulation element 6 is located with respect to the base portion 2 in the Z direction is defined as a first side S1, and a side (lower side in FIG. 3) opposite to the first side S1 is defined as a second side S2. In FIGS. 1 and 2, the second wiring substrate 5 and the like are omitted.

The base portion 2 includes a heat sink 21 and a base wall portion 22. The heat sink 21 is a heat dissipation member formed of, for example, a metal material in a rectangular parallelepiped shape. In this example, the heat sink 21 is of a water-cooling type, and is cooled by causing a coolant to flow in a flow path formed inside. As an example, the temperature of the heat sink 21 during use is about 25°C. A thickness of the heat sink 21 in the Z direction is larger than a thickness of the phase modulation element 6 in the Z direction.

The base wall portion 22 is formed of a metal material such as aluminum in a substantially rectangular plate shape. The base wall portion 22 is disposed on the heat sink 21 and is located on the first side S1 with respect to the heat sink 21. In this example, a portion of the base wall portion 22 on one side in the X direction (left side in FIG. 3) is in contact with the heat sink 21, and a portion of the base wall portion 22 on the other side in the X direction is not in contact with the heat sink 21. In the Y direction, the entire base wall portion 22 is in contact with the heat sink 21.

The housing portion 3 is formed of, for example, a metal material such as aluminum. The housing portion 3 includes a side wall portion 31 (housing side wall portion) and a top wall portion 32 (housing top wall portion). The side wall portion 31 is formed in a rectangular frame shape in plan view (when viewed from the Z direction). The side wall portion 31 is disposed on the base wall portion 22 and surrounds the phase modulation element 6 and the holding portion 7 in plan view. An opening for drawing out the second wiring substrate 5 to the outside of the housing portion 3 is formed in the side wall portion 31.

The top wall portion 32 is connected to the side wall portion 31 and is formed in a rectangular plate shape. The top wall portion 32 faces the base wall portion 22 in the Z direction. The top wall portion 32 and the base wall portion 22 extend parallel to each other and perpendicular to the Z direction. In this example, an accommodation space R for accommodating the phase modulation element 6 and the holding portion 7 is defined by the base wall portion 22, the side wall portion 31, and the top wall portion 32.

An opening 33 (housing opening) through which the laser light L incident on the phase modulation element 6 and the laser light L reflected by the phase modulation element 6 pass is formed in the top wall portion 32. The opening 33 has, for example, a rectangular shape elongated in the Y direction. The opening 33 overlaps a part on a central side of the phase modulation element 6 in plan view. In this example, in plan view, an edge 33a of the opening 33 is located inside an outer edge 63a of the cover member 63. An inner surface (edge 33a) of the opening 33 has an inclined surface inclined (inclined in a tapered shape) with respect to the Z direction so as to face the central side of the phase modulation element 6 as it faces the second side S2. As a result, it is possible to suppress interference of the laser light L incident from an oblique direction (at a relatively large incident angle) with the edge 33a. A thickness of at least a part (all in this example) of the top wall portion 32 in the Z direction is thinner than a thickness of each of the base wall portion 22 and the phase modulation element 6 in the Z direction.

The first wiring substrate 4 is a rectangular plate-shaped ceramic substrate formed of, for example, ceramic (aluminum nitride), and is disposed in the accommodation space R. The first wiring substrate 4 is directly disposed on the base wall portion 22. The case where the first wiring substrate 4 is directly disposed on the base wall portion 22 includes a case where the first wiring substrate 4 is connected to the base wall portion 22 via an adhesive, a tape, or the like. In this example, the entire first wiring substrate 4 is disposed inside the side wall portion 31 in plan view. A part of the first wiring substrate 4 is located between a first side wall portion 72 and a second side wall portion 75 of the holding portion 7 described later in plan view. The first wiring substrate 4 may be disposed such that the entire first wiring substrate 4 does not overlap the holding portion 7 in plan view (for example, inside the opening 33).

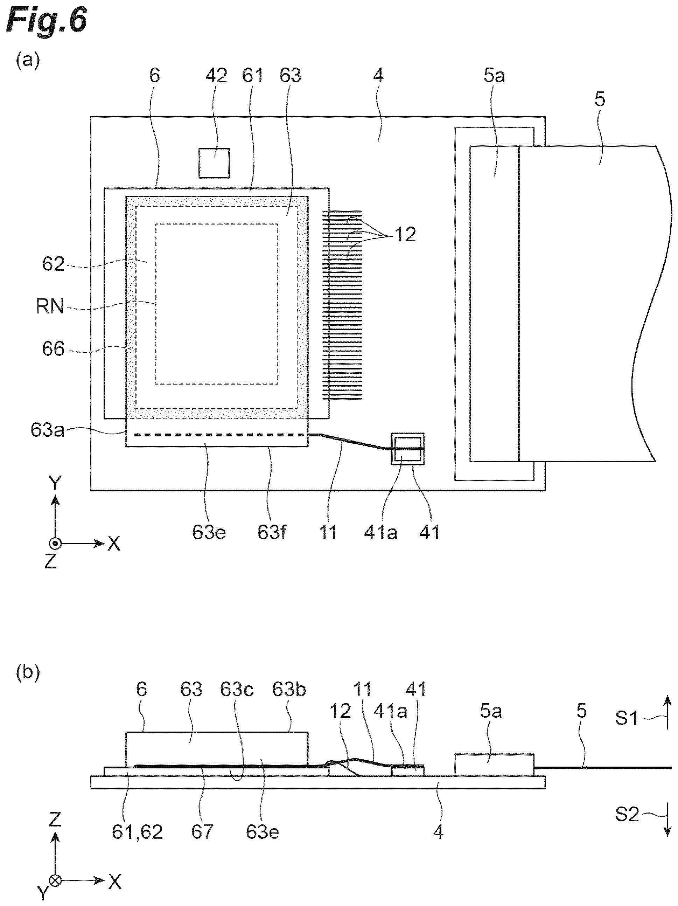

As illustrated in FIGS. 6(a) and 6(b), a predetermined wiring, an electronic component, and the like are provided on the first wiring substrate 4. For example, a connection member 41 is disposed on the first wiring substrate 4. The connection member 41 is formed in a substantially rectangular parallelepiped shape, for example, and has a predetermined height in the Z direction. The height of the connection member 41 is set to be substantially equal to a height of a surface 63c of the cover member 63 on a second side S2 described later. The height of the connection member 41 and the surface 63c of the cover member 63 is a height from the surface of the first wiring substrate 4. An electrode pad 41a electrically connected to the first wiring substrate 4 is formed on the connection member 41. A wire 11 for electrical connection with an electrode layer 67 described later is electrically connected to the electrode pad 41a. The connection member 41 is disposed so as to be located, for example, between the phase modulation element 6 and the second wiring substrate 5 in the X direction.

In addition, a temperature monitoring element 42 for monitoring (detecting) a temperature of the phase modulation element 6 is provided on the first wiring substrate 4. The temperature monitoring element 42 is, for example, a temperature sensor such as a thermistor. The temperature monitoring element 42 is disposed adjacent to (facing) the phase modulation element 6 in the Y direction, for example.

The second wiring substrate 5 is electrically connected to the first wiring substrate 4. The second wiring substrate 5 is, for example, a flexible circuit board having flexibility, and is electrically connected to the first wiring substrate 4 via a connection portion 5a. More specifically, the second wiring substrate 5 is connected to a portion of the first wiring substrate 4 on one side in the X direction (right side in FIG. 3) in the accommodation space R. A predetermined wiring, an electronic component, and the like may be provided on the second wiring substrate 5. For example, the second wiring substrate 5 is drawn out from the opening formed in the side wall portion 31 to the outside of the accommodation space R.

The phase modulation element 6 is disposed in the accommodation space R, and the entire phase modulation element 6 is located inside the side wall portion 31 in plan view. In this example, the phase modulation element 6 is disposed to be offset to the side (left side in FIG. 3) opposite to the second wiring substrate 5 with respect to the center of the accommodation space R in the X direction. In the phase modulation element 6, the circuit board 61, the liquid crystal layer 62, and the cover member 63 are laminated in this order in the Z direction. That is, the liquid crystal layer 62 is formed on the circuit board 61, and the cover member 63 is formed on the liquid crystal layer 62. The phase modulation element 6 is a reflection-type spatial light modulator. In this example, the phase modulation element 6 is an LCOS-SLM (liquid crystal on silicon-spatial light modulator).

For example, the laser light L is incident on the phase modulation element 6 from the cover member 63 side along the Z direction (thickness direction of the phase modulation element 6). The laser light L incident from the cover member 63 is incident on the liquid crystal layer 62, and the phase of the laser light L is modulated when traveling in the liquid crystal layer 62. More specifically, an inclination of liquid crystal molecules in the liquid crystal layer 62 is controlled for each pixel by a voltage applied from the circuit board 61, and the phase of the laser light L incident on each pixel is controlled by changing a refractive index of the liquid crystal. The laser light L incident on the liquid crystal layer 62 is reflected by the circuit board 61.

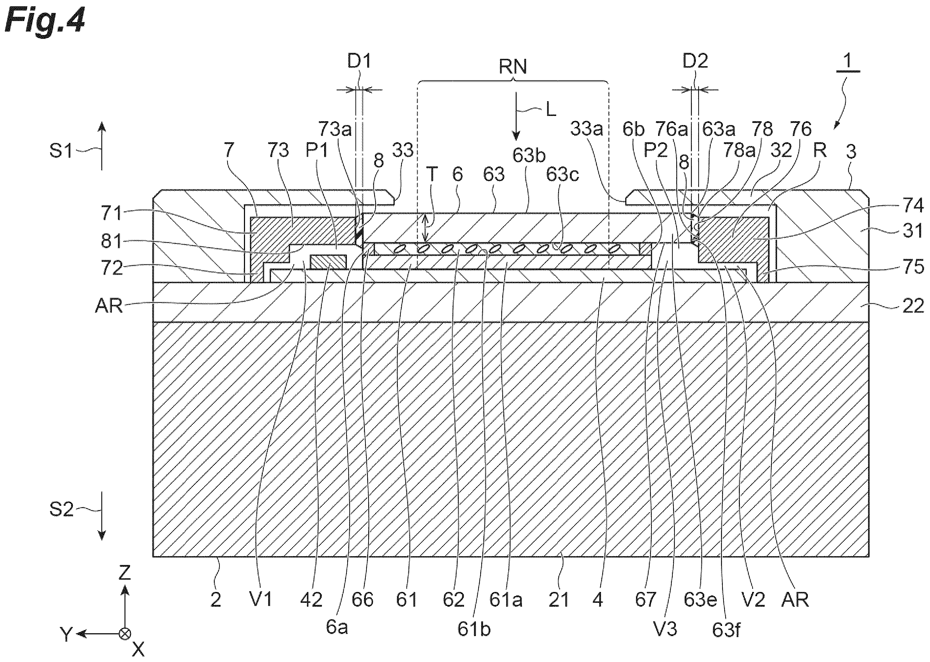

The circuit board 61 is a rectangular plate-shaped CMOS chip formed of, for example, silicon. For example, pixel electrodes are two-dimensionally disposed on the CMOS chip. The circuit board 61 is directly disposed on the first wiring substrate 4, and is disposed on the base wall portion 22 via the first wiring substrate 4. The case where the circuit board 61 is directly disposed on the first wiring substrate 4 includes a case where the circuit board 61 is connected to the first wiring substrate 4 via an adhesive, a tape, or the like. The circuit board 61 is electrically connected to the first wiring substrate 4 by, for example, a wire 12. The circuit board 61 protrudes from the cover member 63 on both sides in a short side direction (X direction) of the cover member 63 with respect to the cover member 63 having a rectangular shape in plan view. The wire 12 is connected to the protruding portion of the circuit board 61. A thickness of the CMOS chip constituting the circuit board 61 may be thinner than a thickness T (FIG. 4) of the cover member 63.

The circuit board 61 has an effective pixel region 61a in the central portion. The effective pixel region 61a is, for example, a rectangular region, and has dimensions of 12.8 mm (X direction) × 16 mm (Y direction) as an example. In the present embodiment, the effective region RN on the surface 63b of the cover member 63 on the first side S1 is defined by the effective pixel region 61a. That is, the effective region RN is a region overlapping the effective pixel region 61a in plan view.

The wire 12 is covered with a protective material 13. The protective material 13 is formed of a resin material different from the potting material 8. The material of the protective material 13 is, for example, a liquid rubber, and may be a rubber or a resin having a higher viscosity than the potting material 8. The protective material 13 may be formed of a curable resin that is not gel-like or putty-like. By providing the protective material 13, the wire 12 can be reliably protected from the potting material 8.

The liquid crystal layer 62 is formed on the circuit board 61 and is disposed on the first side S1 with respect to the circuit board 61. The cover member 63 is formed on the liquid crystal layer 62 so as to cover the entire liquid crystal layer 62, and is disposed on the first side S1 with respect to the liquid crystal layer 62. A thickness of the liquid crystal layer 62 may be thinner than the thickness T of the cover member 63. A sealing resin 66 having a rectangular frame shape in plan view is provided around the liquid crystal layer 62, and the periphery of the liquid crystal layer 62 is sealed by the sealing resin 66. A width of one side of the sealing resin 66 in plan view (width in the direction perpendicular to the side) is, for example, about 1 mm. The sealing resin 66 can be regarded as a part of the liquid crystal layer 62. The sealing resin 66 is formed of, for example, a UV curable resin, and is joined to the circuit board 61 and the cover member 63.

The cover member 63 is formed of, for example, a light transmissive material having transparency to the laser light L in a rectangular plate shape. In this example, the cover member 63 is a sapphire substrate made of sapphire. The cover member 63 functions as a light incident portion in the phase modulation element 6. The cover member 63 also functions as a reference potential in voltage application by the circuit board 61.

A size of the cover member 63 in plan view is, for example, about 18 mm (X direction) × 25 mm (Y direction). A thickness T (length in the Z direction) of the cover member 63 is 0.5 mm or more, for example, 3 mm. That is, the cover member 63 is formed in a rectangular shape in plan view, and has a long side direction and a short side direction. In the present embodiment, the cover member 63 is disposed such that the long side direction is parallel to the Y direction. The thickness T of the cover member 63 may be larger than the thickness of each of the circuit board 61, the liquid crystal layer 62, the first wiring substrate 4, the second wiring substrate 5, and the base wall portion 22.

An electrode layer 67 is formed on the surface 63c of the cover member 63 on the second side S2 (FIGS. 4 and 6(b)). The electrode layer 67 is, for example, a transparent electrode formed of indium tin oxide (ITO). The electrode layer 67 is formed on the entire surface 63c, and is located between the liquid crystal layer 62 and the cover member 63. The cover member 63 has a protruding portion 63e protruding to one side in the Y direction with respect to the circuit board 61 and the liquid crystal layer 62 in plan view. An end surface 63f of the protruding portion 63e is, for example, a flat surface perpendicular to the Y direction, and faces a second protruding portion 76 of a second holding portion 74 of the holding portion 7 described later. The electrode layer 67 is also formed on the protruding portion 63e, and the above-described wire 11 is electrically connected to the electrode layer 67 on the protruding portion 63e. A reference voltage is applied to the electrode layer 67 via the wire 11. In this example, a length of the protruding portion 63e in the Y direction is larger than the thickness of each of the cover member 63, the liquid crystal layer 62, the circuit board 61, and the first wiring substrate 4 in the Z direction. As a result, a sufficient space can be secured between the protruding portion 63e and the base portion 2, and the potting material 8 can be further suppressed from flowing into the effective region RN of the cover member 63. In addition, it is possible to secure the electrical connection via the wire 11 by sufficiently securing a region to which the wire 11 is connected on the protruding portion 63e.

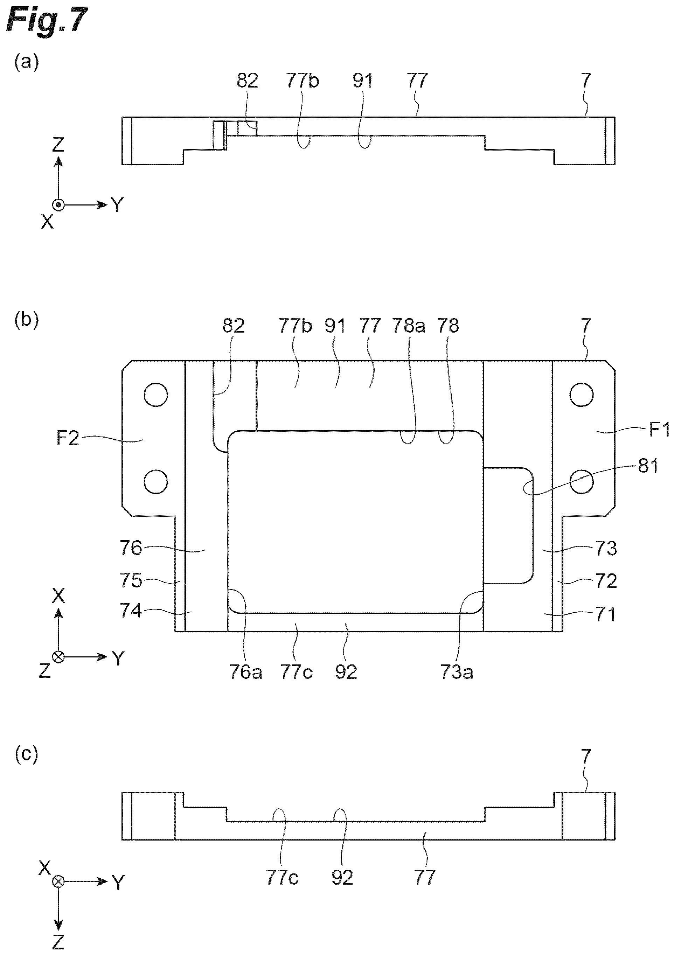

The holding portion 7 is formed of, for example, a metal material such as aluminum. By forming the holding portion 7 using a metal material, heat in the phase modulation element 6 can be quickly dissipated to the base portion 2 via the holding portion 7. The holding portion 7 is fixed to the base wall portion 22 of the base portion 2. In the present embodiment, the fixing between the holding portion 7 and the base portion and the fixing between the housing portion 3 and the base portion 2 are performed by, for example, screws. The fixing is not limited to the screw, and may be performed by, for example, an adhesive, a tape, or the like. As illustrated in FIGS. 2 and 7(b), a first fixing portion F 1 in which screw holes for fixing to the base portion 2 are formed is formed on a side (one side of the holding portion 7 in the Y direction) (first holding portion 71) of the first side wall portion 72 opposite to the top wall portion 77 in the Y direction, and a second fixing portion F2 in which screw holes for fixing to the base portion 2 are formed is formed on a side (the other side of the holding portion 7 in the Y direction) (second holding portion 74) of the second side wall portion 75 opposite to the top wall portion 77 in the Y direction. The holding portion 7 and the base portion 2 may be integrally formed with each other, or the holding portion 7 and the housing portion 3 may be integrally formed with each other. For example, the holding portion 7 and the base portion 2, or the holding portion 7 and the housing portion 3 may be integrally formed with each other by metal processing.

The holding portion 7 includes a first holding portion 71, a second holding portion 74, and a top wall portion 77. The first holding portion 71, the second holding portion 74, and the top wall portion 77 are integrally formed with each other. The first holding portion 71 and the second holding portion 74 are disposed such that the phase modulation element 6 is located therebetween in plan view (such that the phase modulation element 6 is interposed in the Y direction).

The first holding portion 71 includes a first side wall portion 72 and a first protruding portion 73. The first side wall portion 72 is formed in, for example, a rectangular plate shape and extends perpendicularly to the Y direction. The first side wall portion 72 is directly disposed on the base wall portion 22. The first protruding portion 73 is formed in, for example, a substantially rectangular plate shape and extends perpendicularly to the Z direction. The first protruding portion 73 extends toward the phase modulation element 6 from the end portion of the first side wall portion 72 on the first side S1 to one side in the Y direction. An end surface 73a of the first protruding portion 73 faces the phase modulation element 6 in the Y direction. In this example, the end surface 73a is a flat surface perpendicular to the Y direction, and faces the side surfaces of the liquid crystal layer 62 and the cover member 63. In this example, a thickness of at least a part of the first protruding portion 73 in the Z direction is larger than the thickness of each of the cover member 63, the liquid crystal layer 62, the circuit board 61, the first wiring substrate 4, and the base wall portion 22 in the Z direction. As a result, a mechanical strength of the first protruding portion 73 can be sufficiently secured. In addition, even when a recessed portion 81 described later is formed in the first protruding portion 73 as in the present embodiment, a mechanical strength can be sufficiently secured. A length of the first protruding portion 73 in the Y direction is larger than the thickness of each of the cover member 63, the liquid crystal layer 62, the circuit board 61, the first wiring substrate 4, and the base wall portion 22 in the Z direction. As a result, a sufficient space can be secured between the first protruding portion 73 and the base portion 2, and the potting material 8 can be further suppressed from flowing into the effective region RN of the cover member 63. A length of the first protruding portion 73 in the X direction may be larger than the length of the cover member 63 in the X direction. As a result, a sufficient space can be secured between the first protruding portion 73 and the base portion 2, and the potting material 8 can be further suppressed from flowing into the effective region RN.

The second holding portion 74 includes a second side wall portion 75 and a second protruding portion 76. The second side wall portion 75 is formed in, for example, a rectangular plate shape and extends perpendicularly to the Y direction. The second side wall portion 75 is directly disposed on the base wall portion 22. The first side wall portion 72 and the second side wall portion 75 face each other with the first wiring substrate 4 and the circuit board 61 interposed therebetween in the Y direction. That is, the first wiring substrate 4 and the phase modulation element 6 are disposed between the first side wall portion 72 and the second side wall portion 75 in plan view. The second protruding portion 76 is formed in, for example, a substantially rectangular plate shape and extends perpendicularly to the Z direction. The second protruding portion 76 extends toward the phase modulation element 6 from the end portion of the second side wall portion 75 on the first side S1 to the other side in the Y direction. An end surface 76a of the second protruding portion 76 faces the phase modulation element 6 in the Y direction. In this example, the end surface 76a is a flat surface perpendicular to the Y direction, and faces the side surfaces of the liquid crystal layer 62 and the cover member 63. In this example, a thickness of at least a part of the second protruding portion 76 in the Z direction is larger than the thickness of each of the cover member 63, the liquid crystal layer 62, the circuit board 61, and the first wiring substrate 4 in the Z direction. As a result, a mechanical strength of the second protruding portion 76 can be sufficiently secured. In addition, even when a recessed portion 82 described later is formed in the second protruding portion 76 as in the present embodiment, a mechanical strength can be sufficiently secured. A length of the second protruding portion 76 in the Y direction is larger than the thickness of each of the cover member 63, the liquid crystal layer 62, the circuit board 61, the first wiring substrate 4, and the base wall portion 22 in the Z direction. As a result, a sufficient space can be secured between the second protruding portion 76 and the base portion 2, and the potting material 8 can be further suppressed from flowing into the effective region RN. A length of the second protruding portion 76 in the X direction may be larger than the length of the cover member 63 in the X direction. As a result, a sufficient space can be secured between the second protruding portion 76 and the base portion 2, and the potting material 8 can be further suppressed from flowing into the effective region RN.

The first side wall portion 72 faces a first side surface 6a of the phase modulation element 6. The first side surface 6a is a side surface of the phase modulation element 6 on one side in the Y direction (left side in FIG. 4), and is configured by the side surfaces of the circuit board 61, the liquid crystal layer 62, and the cover member 63. In this example, the first side wall portion 72 faces the side surface of the circuit board 61. The second side wall portion 75 faces a second side surface 6b of the phase modulation element 6. The second side surface 6b is a side surface opposite to the first side surface 6a of the phase modulation element 6, and is configured by the side surfaces of the circuit board 61, the liquid crystal layer 62, and the cover member 63. In this example, the second side wall portion 75 faces the side surface of the circuit board 61.

The top wall portion 77 is connected to the first side wall portion 72 and the second side wall portion 75, and is formed in a substantially rectangular plate shape. The top wall portion 77 extends perpendicularly to the Z direction and faces the base wall portion 22 and the first wiring substrate 4 in the Z direction. A thickness of at least a part (all in this example) of the top wall portion 77 in the Z direction is thicker than a thickness of the top wall portion 32 (housing top wall portion) in the Z direction.

An opening 78 through which the laser light L incident on the phase modulation element 6 and the laser light L reflected by the phase modulation element 6 pass is formed in the top wall portion 77. The opening 78 has a rectangular shape elongated in the Y direction. The opening 78 overlaps the phase modulation element 6 in plan view. More specifically, a part of the phase modulation element 6 (in this example, the cover member 63) is disposed in the opening 78, and an edge 78a of the opening 78 is located outside the outer edge 63a of the cover member 63 in plan view. That is, the opening 78 is formed in a size that allows the cover member 63 to be disposed inside. In addition, the opening 78 overlaps the entire opening 33 formed in the top wall portion 32 of the housing portion 3 in plan view. That is, the opening 78 is formed to be a size larger than the opening 33, and the edge 78a of the opening 78 is located outside the edge 33a of the opening 33 in plan view. As a result, the laser light L having passed through the opening 33 can be reliably incident on the effective region RN of the cover member 63. The size of the opening 78 is, for example, 19 mm (X direction) × 26.5 mm (Y direction).

A distance D1 (shortest distance) between the end surface 73a of the first protruding portion 73 and the phase modulation element 6 (the liquid crystal layer 62 and the cover member 63) in the Y direction is smaller than the thickness T of the cover member 63. A distance D2 (shortest distance) between the end surface 76a of the second protruding portion 76 and the phase modulation element 6 (the circuit board 61, the liquid crystal layer 62, and the cover member 63) in the Y direction is smaller than the thickness T of the cover member 63. The distances D1 and D2 between the end surfaces 73a and 76a and the phase modulation element 6 are, for example, 5 mm or less, preferably 3 mm or less, and more preferably 1 mm or less. In the present embodiment, the thickness is about 1 mm. When the distances D1 and D2 are reduced, the amount of the potting material 8 disposed between the cover member 63 and the end surfaces 73a and 76a is restricted, such that the heat generated in the phase modulation element 6 can be efficiently transferred to the holding portion 7 via the potting material 8.

In this example, the phase modulation element 6 is disposed inside the holding portion 7 such that a part of the cover member 63 on the first side S1 protrudes from the opening 78 to the first side S1. Therefore, the surface 63b of the cover member 63 on the first side S1 is located (protrudes) on the first side S1 with respect to the surface 77a of the top wall portion 77 on the first side S1. The amount of protrusion of the surface 63b of the cover member 63 on the first side S1 from the surface 77a of the top wall portion 77 on the first side S1 in the Z direction is, for example, about 0.1 mm.

As illustrated in FIG. 3, in the X direction, the holding portion 7 is configured to define a first opening 91 facing a third side surface 6c of the phase modulation element 6 and a second opening 92 facing a fourth side surface 6d of the phase modulation element 6. The third side surface 6c is a side surface of the phase modulation element 6 on one side in the X direction (right side in FIG. 3), and is configured by the side surfaces of the circuit board 61, the liquid crystal layer 62, and the cover member 63. The fourth side surface 6d is a side surface opposite to the third side surface 6c of the phase modulation element 6, and is configured by the side surfaces of the circuit board 61, the liquid crystal layer 62, and the cover member 63. In addition, the top wall portion 77 of the holding portion 7 faces the third side surface 6c and the fourth side surface 6d of the phase modulation element 6 in the X direction. As a result, it is possible to suppress the potting material 8 from flowing out to the surface 63b of the cover member 63.

In this example, the holding portion 7 does not have a side wall portion on one side in the X direction, and one side in the X direction is opened. As a result, the first opening 91 is formed on one side in the X direction. A recessed portion 77b is formed in the top wall portion 77 at a portion located on one side in the X direction with respect to the phase modulation element 6 (FIGS. 7(a) and 7(b)). The recessed portion 77b is formed so as to open to the inside and the outside of the holding portion 7. The recessed portion 77b also constitutes the first opening 91. Similarly, the holding portion 7 does not have a side wall portion on the other side in the X direction, and the other side in the X direction is opened. As a result, the second opening 92 is formed on the other side in the X direction. In addition, a recessed portion 77c is formed in the top wall portion 77 at a portion located on the other side in the X direction with respect to the phase modulation element 6 (FIGS. 7(b) and 7(c)). The recessed portion 77c is formed so as to open to the inside and the outside of the holding portion 7. The recessed portion 77c also constitutes the second opening 92.

The wire 12 and the protective material 13 described above are disposed in the first opening 91. That is, the first opening 91 functions as an arrangement space for the wire 12. In this example, the potting material 8 to be described later is disposed between the top wall portion 77 and the third side surface 6c of the phase modulation element 6, but the potting material 8 is not disposed in the first opening 91. That is, air is disposed in the first opening 91. In addition, the potting material 8 is disposed between the top wall portion 77 and the fourth side surface 6d of the phase modulation element 6, but the potting material 8 is not disposed in the second opening 92. That is, air is disposed in the second opening 92. A width of the first opening 91 in the X direction is larger than the thickness of each of the cover member 63, the liquid crystal layer 62, the circuit board 61, the first wiring substrate 4, and the base wall portion 22 in the Z direction. As a result, it is possible to secure a escape space for the potting material 8 while securing the arrangement space for the wire 12, and it is possible to further suppress the potting material 8 from flowing into the effective region RN.

In addition, the recessed portion 81 for disposing the above-described temperature monitoring element 42 is formed in the holding portion 7 (FIGS. 4 and 7(b)). In this example, the temperature monitoring element 42 is disposed so as to overlap the first protruding portion 73 of the top wall portion 77 in plan view, and the recessed portion 81 is formed in the first protruding portion 73. In this example, a part of the temperature monitoring element 42 on the first side S1 is disposed in the recessed portion 81, thereby avoiding interference between the temperature monitoring element 42 and the holding portion 7.

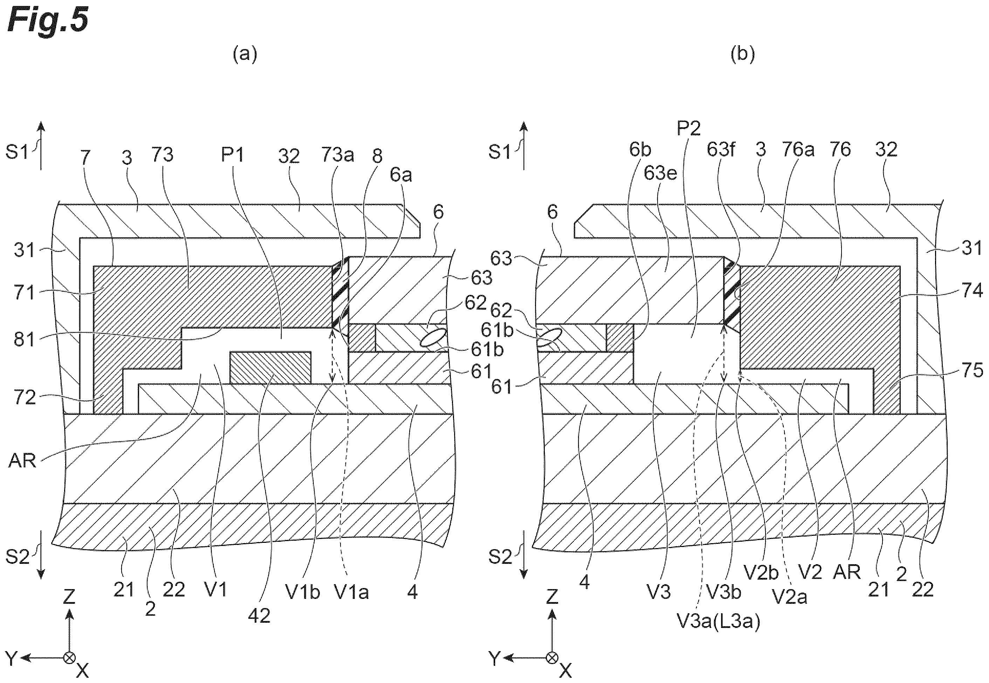

In addition, the recessed portion 82 for disposing the wire 11 described above, that is, the wire 11 for electrically connecting the first wiring substrate 4 and the electrode layer 67 on the surface 63c of the cover member 63 on the second side S2 to each other is formed in the holding portion 7 (FIGS. 7(a) and 7(b)). In this example, since the wire 11 is drawn out from the cover member 63 to one side in the X direction (the right side in FIG. 5), the recessed portion 82 is formed in a portion of the top wall portion 77 on one side in the X direction. The recessed portion 82 is connected to the recessed portion 77b described above. Since a part of the wire 11 is disposed in the recessed portion 82, interference between the wire 11 and the holding portion 7 is avoided.

The potting material 8 is disposed between the phase modulation element 6 and the holding portion 7, and is held by the holding portion 7. As illustrated in FIG. 4, the potting material 8 is disposed in each of a first space P1 formed on one side in the Y direction with respect to the phase modulation element 6 and a second space P2 formed on the other side in the Y direction with respect to the phase modulation element 6. In this example, the first space P1 is formed by the first side surface 6a of the phase modulation element 6, the first side wall portion 72 and the first protruding portion 73 of the first holding portion 71, the base wall portion 22, and the first wiring substrate 4, and the second space P2 is formed by the second side surface 6b of the phase modulation element 6, the second side wall portion 75 and the second protruding portion 76 of the second holding portion 74, the base wall portion 22, and the first wiring substrate 4.

In the first space P1, the potting material 8 connects the phase modulation element 6 and the first holding portion 71 to each other. In this example, the potting material 8 is disposed between the end surface 73a of the first protruding portion 73 and the first side surface 6a of the phase modulation element 6 (in this example, the side surfaces of the liquid crystal layer 62 and the cover member 63), and connects the end surface 73a and the first side surface 6a to each other. That is, the potting material 8 is in contact with the end surface 73a and the first side surface 6a.

In this example, the potting material 8 is not disposed in a portion other than the portion between the end surface 73a and the first side surface 6a in the first space P1, and air AR (air layer) is disposed. Therefore, the air AR is disposed in an entire overlapping portion V1 of the first space P1 overlapping the first protruding portion 73 in plan view. The overlapping portion V1 is a partial space formed by the first side wall portion 72, the first protruding portion 73, the base wall portion 22, and the first wiring substrate 4, and is a space between the first protruding portion 73, the base wall portion 22, and the first wiring substrate 4. The air AR may be any gas, for example, the atmosphere existing around the phase modulation module 1. In this example, the overlapping portion V1 (first space P1) is connected to a space outside the holding portion 7 and a space outside the housing portion 3 (phase modulation module 1), but may be sealed. The air AR may be disposed in layers, or may be disposed (in a void shape) in a gap in the potting material 8 at, for example, the overlapping portions V1 to V4. The air AR may be disposed in a concentrated manner in one portion, or may be disposed (discontinuously) in a plurality of portions.

As illustrated in FIG. 5(a), an edge V1b of an opening V1a of the overlapping portion V1 on the second side S2 at a position corresponding to the end surface 73a of the first protruding portion 73 (position overlapping the end surface 73a in plan view) is located on the second side S2 with respect to a surface 61b of the circuit board 61 on the first side S1. That is, in FIG. 5(a), the overlapping portion V1 is opened to the phase modulation element 6 side at the opening V1a, and the lower edge V1b of the opening V1a is located below the upper surface 61b of the circuit board 61. A length of the opening V1a in the Z direction is, for example, about 2 mm. The length of the opening V1a in the Z direction is larger than the thickness of each of the liquid crystal layer 62, the circuit board 61, and the first wiring substrate 4. As a result, the potting material 8 easily enters the overlapping portion V1, and the protrusion of the potting material 8 into the effective region RN of the phase modulation element 6 can be more effectively suppressed. The length of the opening V1a in the Z direction is larger than the distance D1 between the end surface 73a of the first protruding portion 73 and the phase modulation element 6 in the Y direction. As a result, the potting material 8 easily enters the overlapping portion V1, and the protrusion of the potting material 8 into the effective region RN of the phase modulation element 6 can be more effectively suppressed.

In the first space P1, the potting material 8 is separated from the base wall portion 22 and the first wiring substrate 4 by the air AR being disposed between the potting material 8, the base wall portion 22, and the first wiring substrate 4. In the first space P1, the air AR is in contact with the first side surface 6a of the phase modulation element 6 (in this example, the side surfaces of the circuit board 61 and the liquid crystal layer 62) and the first side wall portion 72. In the first space P1, a volume of the air AR is larger than a volume of the potting material 8.

In the second space P2, the potting material 8 connects the phase modulation element 6 and the second holding portion 74 to each other. In this example, the potting material 8 is disposed between the end surface 76a of the second protruding portion 76 and the second side surface 6b of the phase modulation element 6, and connects the end surface 76a and the second side surface 6b to each other. More specifically, the potting material 8 is disposed between the end surface 63f of the protruding portion 63e of the cover member 63 constituting the second side surface 6b and the end surface 76a of the second protruding portion 76, and connects the end surface 63f and the end surface 76a to each other. That is, the potting material 8 is in contact with the end surface 63f and the end surface 76a.

In this example, the potting material 8 is not disposed in a portion other than the portion between the end surface 63f and the end surface 76a in the second space P2, and air AR (air layer) is disposed. Therefore, in the second space P2, the air AR is disposed in the entire overlapping portion V2 overlapping the second protruding portion 76 in plan view. The overlapping portion V2 is a partial space formed by the second side wall portion 75, the second protruding portion 76, the base wall portion 22, and the first wiring substrate 4, and is a space between the second protruding portion 76, the base wall portion 22, and the first wiring substrate 4. In this example, the overlapping portion V2 (second space P2) is connected to the space outside the holding portion 7 and the space outside the housing portion 3 (phase modulation module 1), but may be sealed.

As illustrated in FIG. 5(b), an edge V2b of an opening V2a of the overlapping portion V2 on the second side S2 at a position corresponding to the end surface 76a of the second protruding portion 76 (position overlapping the end surface 76a in plan view) is located on the second side S2 with respect to the surface 61b of the circuit board 61 on the first side S1. That is, in FIG. 5(b), the overlapping portion V2 is opened to the phase modulation element 6 side at the opening V2a, and the lower edge V2b of the opening V2a is located below the upper surface 61b of the circuit board 61. A length of the opening V2a in the Z direction is, for example, about 0.5 mm.

The air AR is also disposed in the entire overlapping portion V3 of the second space P2 overlapping the protruding portion 63e of the cover member 63 in plan view. The overlapping portion V3 is a partial space formed by the protruding portion 63e, the circuit board 61, the liquid crystal layer 62, and the first wiring substrate 4, and is a space between the protruding portion 63e and the first wiring substrate 4.

As illustrated in FIG. 5(b), an edge V3b of an opening V3a of the overlapping portion V3 on the second side S2 at a position corresponding to the end surface 63f of the protruding portion 63e (position overlapping the end surface 63f in plan view) is located on the second side S2 with respect to the surface 61b of the circuit board 61 on the first side S1. That is, in FIG. 5(b), the overlapping portion V3 is opened to the second holding portion 74 side at the opening V3a, and the lower edge V3b of the opening V3a is located below the upper surface 61b of the circuit board 61. A length L3a of the opening V3a in the Z direction is 1/2 or more of a maximum length of the overlapping portion V3 in the Z direction. In this example, the length L3a is equal to the maximum length of the overlapping portion V3 in the Z direction. The length L3a of the opening V3a in the Z direction is, for example, about 2 mm. The length L3a of the opening V3a in the Z direction is larger than the thickness of each of the liquid crystal layer 62, the circuit board 61, and the first wiring substrate 4. As a result, the potting material 8 easily enters the overlapping portion V3, and the protrusion of the potting material 8 into the effective region RN of the phase modulation element 6 can be more effectively suppressed. The length L3a of the opening V3a in the Z direction is larger than the distance D2 between the end surface 76a of the second protruding portion 76 and the phase modulation element 6 in the Y direction. As a result, the potting material 8 easily enters the overlapping portion V3, and the protrusion of the potting material 8 into the effective region RN of the phase modulation element 6 can be more effectively suppressed.

Also in the second space P2, the potting material 8 is separated from the base wall portion 22 and the first wiring substrate 4 by the air AR being disposed between the potting material 8, the base wall portion 22, and the first wiring substrate 4. In the second space P2, the air AR is in contact with the second side surface 6b of the phase modulation element 6 (in this example, the side surfaces of the circuit board 61 and the liquid crystal layer 62) and the second side wall portion 75. In the second space P2, the volume of the air AR is larger than the volume of the potting material 8.

The potting material 8 is formed of, for example, a resin material such as silicone, and has a high viscosity. The potting material 8 may be, for example, a non-silicone-based resin material, a silver paste, a heat dissipation adhesive, a liquid rubber, or the like. The potting material 8 is gel-like or clay-like (putty-like) and is not cured. The potting material 8 has a flow rate of, for example, 10 g/min or more and 60 g/min or less. This flow rate is a measurement value of how many grams of flow rate per minute are obtained when a sample is extruded at a pressure of 0.6 MPa using a syringe having a diameter of 2.54 mm and a capacity of 30cc, and the smaller the flow rate, the higher the viscosity. The potting material 8 has a viscosity of, for example, 100 to 15000 Pa·s.

A thermal conductivity of the potting material 8 is 0.5 W/(m·K) or more, for example, about 5.0 W/(m·K). The thermal conductivity of the potting material 8 is larger than a thermal conductivity of the air AR and smaller than a thermal conductivity of the cover member 63 and the holding portion 7. A thermal conductivity of the air AR is, for example, 0.0257 W/(m·K). When the cover member 63 is formed of sapphire, the thermal conductivity of the cover member 63 is 42 W/(m·K). When the holding portion 7 is formed of aluminum, a thermal conductivity of the holding portion 7 is 237 W/(m·K).

For example, after the phase modulation element 6 and the holding portion 7 are fixed to the base wall portion 22, the potting material 8 is injected into a gap between the first holding portion 71, the second holding portion 74, and the phase modulation element 6. Alternatively, the holding portion 7 to which the potting material 8 is applied in advance may be brought close to the phase modulation element 6 fixed to the base wall portion 22 so as to be disposed between the phase modulation element 6, the first holding portion 71, and the second holding portion 74. In any case, the air AR can be disposed in the overlapping portions V1 to V3 by adjusting the amount of the potting material 8.

### [Actions and Effects]

In the phase modulation module 1, the first holding portion 71 has the first protruding portion 73 extending from the first side wall portion 72 toward the phase modulation element 6, the potting material 8 connects the end surface 73a of the first protruding portion 73 and the first side surface 6a of the phase modulation element 6 to each other in the first space P1, and the air AR is disposed in the overlapping portion V1 of the first space P1 overlapping the first protruding portion 73 in plan view (when viewed from the Z direction). By disposing the air AR in the first space P1 between the phase modulation element 6 and the first holding portion 71 in this manner, the air AR functions as a buffer for the potting material 8, and for example, as compared with a case where the potting material 8 is disposed in the entire first space P1, it is possible to suppress the potting material 8 from protruding (moving) to the effective region RN of the phase modulation element 6 during manufacturing, transportation, use, or the like. For example, when the amount of the potting material 8 to be applied varies during manufacturing (assembling) the phase modulation module 1, it is possible to suppress the potting material 8 from protruding to the effective region RN of the phase modulation element 6. In addition, even when the phase modulation module 1 vibrates during transportation or use, or when the phase modulation module 1 is used (mounted) at an angle at which the potting material 8 can move to the effective region RN side, it is possible to suppress the potting material 8 from protruding to the effective region RN of the phase modulation element 6. In particular, in the phase modulation module 1, since the first holding portion 71 has the first protruding portion 73, a wide space (air reservoir) for disposing the air AR can be secured between the first protruding portion 73 and the base portion 2 (first wiring substrate 4), and the protrusion of the potting material 8 to the effective region RN of the phase modulation element 6 can be effectively suppressed. In the phase modulation module 1, the potting material 8 connects the end surface 73a of the first protruding portion 73 of the first holding portion 71 and the first side surface 6a of the phase modulation element 6 to each other in the first space P1, and the air AR is disposed in the overlapping portion V1. As a result, a thermal path via the potting material 8 can be formed at a portion where the distance between the first holding portion 71 and the phase modulation element 6 is short, and the heat generated in the phase modulation element 6 can be efficiently transferred to the holding portion 7 via the potting material 8. That is, the formation of the thermal path is restricted by the air AR having a lower thermal conductivity than the potting material 8 at a portion where the distance between the first holding portion 71 and the phase modulation element 6 is relatively long (between the first side wall portion 72 and the phase modulation element 6), and the thermal path is formed by the potting material 8 having a higher thermal conductivity than the air AR at a portion where the distance between the first holding portion 71 and the phase modulation element 6 is relatively short (between the first protruding portion 73 and the phase modulation element 6), whereby an efficient and preferential heat dissipation path can be realized. Therefore, according to the phase modulation module 1, protrusion of the potting material 8 to the effective region RN of the phase modulation element 6 can be suppressed, and heat dissipation can be improved.

The potting material 8 is separated from the base portion 2 by air AR being disposed between the potting material 8 and the base portion 2. The air AR is in contact with the first side surface 6a of the phase modulation element 6 and the first side wall portion 72 of the first holding portion 71. With these configurations, it is possible to effectively achieve the above-described action and effect of forming the thermal path via the potting material 8 at the portion where the distance between the first holding portion 71 and the phase modulation element 6 is short.

The thermal conductivity of the potting material 8 is 0.5 W/(m·K) or more. As a result, the heat generated in the phase modulation element 6 can be more efficiently transferred to the holding portion 7.

The first holding portion 71 and the second holding portion 74 are formed of a metal material. As a result, the heat transferred to the holding portion 7 can be efficiently transferred to the base portion 2.

The first holding portion 71 and the second holding portion 74 are connected to each other by the top wall portion 77 defining the opening 78 overlapping a part of the phase modulation element 6 in plan view. As a result, the amount of the potting material 8 can be restricted by restricting the arrangement space of the potting material 8 by the top wall portion 77, and the heat generated in the phase modulation element 6 can be efficiently transferred to the holding portion 7 via a small amount of the potting material 8.

In the first space P1, the volume of the air AR is larger than the volume of the potting material 8. As a result, it is possible to more effectively suppress the protrusion of the potting material 8 to the effective region RN of the phase modulation element 6. In addition, it is possible to effectively achieve the above-described action and effect of forming the thermal path via the potting material 8 at the portion where the distance between the first holding portion 71 and the phase modulation element 6 is short as described above.

The potting material 8 connects the end surface 76a of the second protruding portion 76 and the second side surface 6b to each other in the second space P2, and the air AR is disposed in the overlapping portion V2 of the second space P2 overlapping the second protruding portion 76 in plan view. As a result, it is possible to more effectively suppress the protrusion of the potting material 8 to the effective region RN of the phase modulation element 6. In addition, the thermal path via the potting material 8 can be formed at a portion where the distance between the second holding portion 74 and the phase modulation element 6 is short, and the heat generated in the phase modulation element 6 can be efficiently transferred to the holding portion 7 via the potting material 8.

The cover member 63 has the protruding portion 63e protruding with respect to the circuit board 61 in plan view, and the potting material 8 connects the end surface 76a of the second protruding portion 76 and the end surface 63f of the protruding portion 63e to each other in the second space P2. As a result, the distance between the second holding portion 74 and the phase modulation element 6 can be further shortened. By forming the thermal path via the potting material 8 at the portion, the heat generated in the phase modulation element 6 can be more efficiently transferred to the holding portion 7 via the potting material 8.

The edge V1b of the opening V1a of the overlapping portion V1 on the second side S2 at the position corresponding to the end surface 73a of the first protruding portion 73 is located on the second side S2 with respect to the surface 61b of the circuit board 61 on the first side S1. As a result, it is possible to secure a wide length (height) of the opening V1a of the overlapping portion V1 in the Z direction. As a result, the potting material 8 easily enters the overlapping portion V1, and the protrusion of the potting material 8 into the effective region RN of the phase modulation element 6 can be more effectively suppressed.

The length L3a of the opening V3a in the Z direction is 1/2 or more of the maximum length of the overlapping portion V3 in the Z direction. As a result, the potting material 8 more easily enters the overlapping portion V3, and the protrusion of the potting material 8 into the effective region RN of the phase modulation element 6 can be more effectively suppressed.

### [Modifications]

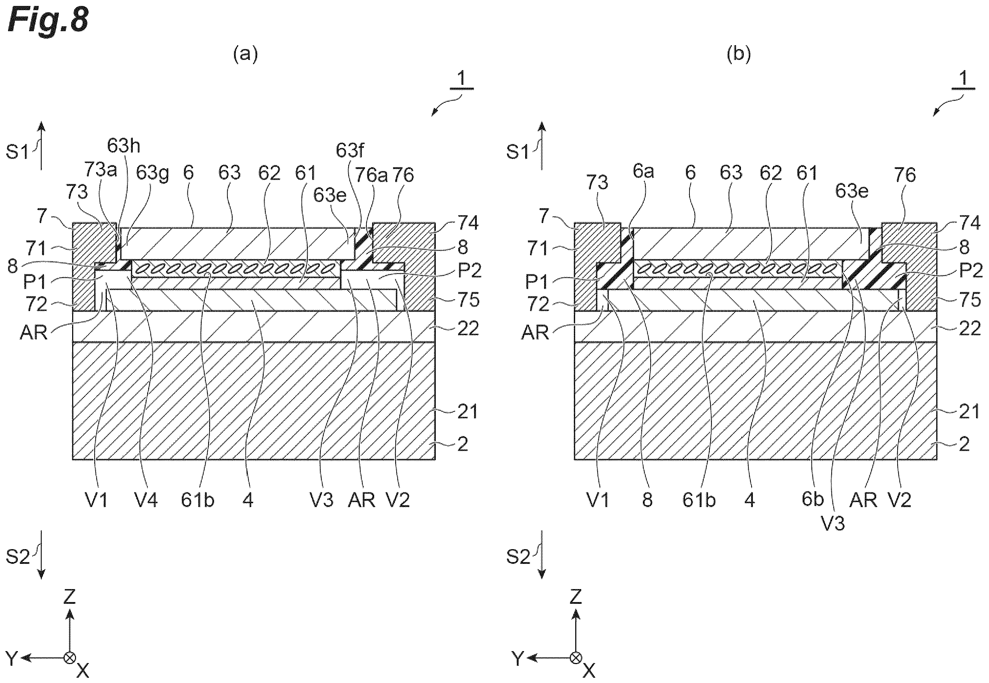

In a first modification illustrated in FIG. 8(a), the cover member 63 has a protruding portion 63g (first protruding portion) protruding to the other side in the Y direction with respect to the circuit board 61 in plan view in addition to the protruding portion 63e (second protruding portion) protruding to one side in the Y direction with respect to the circuit board 61 in plan view. An end surface 63h of the protruding portion 63g is, for example, a flat surface perpendicular to the Y direction, and faces the first protruding portion 73 of the first holding portion 71. In the first modification, in the first space P1, the potting material 8 connects the end surface 73a of the first protruding portion 73 and the end surface 63h of the protruding portion 63g to each other.

In the first modification, the potting material 8 is disposed in a part of the overlapping portion V1 overlapping the first protruding portion 73 in plan view, and the air AR is disposed in the remaining portion. Similarly, the potting material 8 is disposed in a part of the overlapping portion V2 overlapping the second protruding portion 76, a part of the overlapping portion V3 overlapping the protruding portion 63e, and a part of the overlapping portion V4 overlapping the protruding portion 63g in plan view, and the air AR is disposed in the remaining portion. As described above, it is sufficient that the air AR is disposed in at least a part of the overlapping portion V1, and the potting material 8 may be disposed in the remaining portion of the overlapping portion V1. The same applies to the overlapping portions V2 to V4. As illustrated in FIG. 8(a), the housing portion 3 may be omitted.

Also in the first modification, similarly to the above embodiment, it is possible to suppress protrusion of the potting material 8 to the effective region RN of the phase modulation element 6 and to improve heat dissipation. The cover member 63 further includes the protruding portion 63g protruding with respect to the circuit board 61 in plan view, and the potting material 8 connects the end surface 73a of the first protruding portion 73 and the end surface 63h of the protruding portion 63g to each other in the first space P1. As a result, the distance between the first holding portion 71 and the phase modulation element 6 can be further shortened. By forming the thermal path via the potting material 8 at the portion, the heat generated in the phase modulation element 6 can be more efficiently transferred to the holding portion 7 via the potting material 8.

In a second modification illustrated in FIG. 8(b), the potting material 8 is in contact with the entire first side surface 6a of the phase modulation element 6 in the first space P1. That is, the potting material 8 is in contact with the side surfaces of the circuit board 61, the liquid crystal layer 62, and the cover member 63. In addition, the potting material 8 is in contact with the entire second side surface 6b of the phase modulation element 6 (side surfaces of the circuit board 61, the liquid crystal layer 62, and the cover member 63) in the second space P2. In this example, the entire overlapping portion V3 is filled with the potting material 8, and the air AR is not disposed in the overlapping portion V3.

Also in the second modification, since the air AR is disposed in the overlapping portions V1 and V2, it is possible to suppress the protrusion of the potting material 8 to the effective region RN of the phase modulation element 6 and to improve the heat dissipation similarly to the above embodiment. In addition, since the potting material 8 is in contact with the circuit board 61, the heat generated in the liquid crystal layer 62 and transferred to the circuit board 61 can be transferred to the holding portion 7 via the potting material 8.

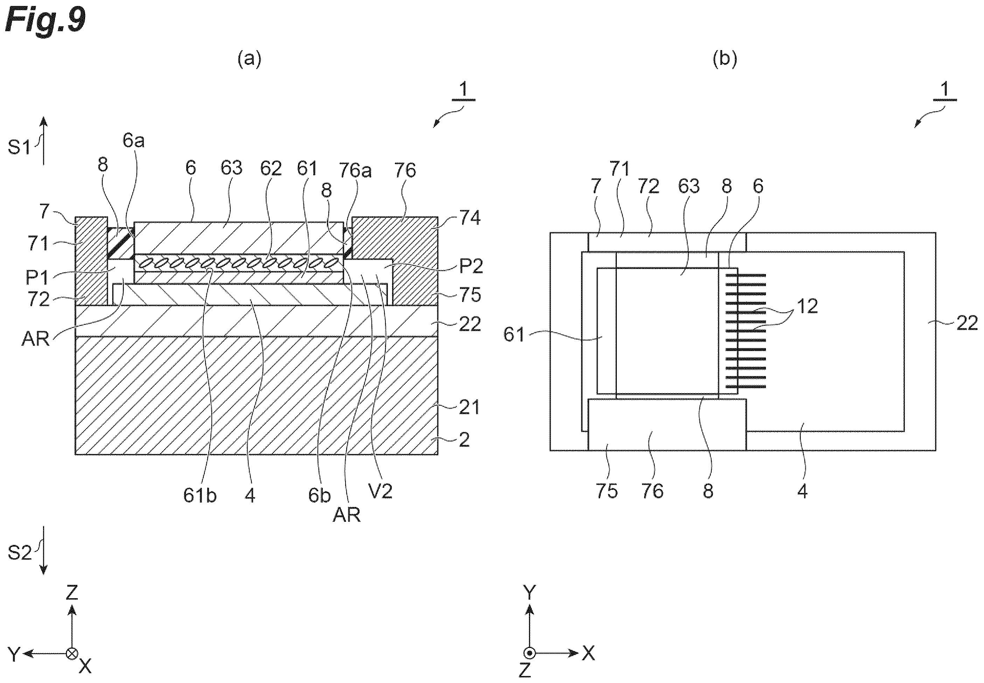

In a third modification illustrated in FIGS. 9(a) and 9(b), the holding portion 7 does not have the top wall portion 77. In this case, the first holding portion 71 and the second holding portion 74 are configured separately. In addition, the first side wall portion 72 does not have the first protruding portion 73 and only has the first side wall portion 72. Further, the cover member 63 does not have the protruding portion 63e protruding from the circuit board 61 in plan view. In the third modification, in the first space P1, the potting material 8 connects the first side wall portion 72 and the first side surface 6a of the phase modulation element 6 to each other. In the second space P2, the potting material 8 connects the end surface 76a of the second protruding portion 76 and the second side surface 6b of the phase modulation element 6 to each other. Also in the third modification, since the air AR is disposed in the overlapping portion V2, it is possible to suppress the protrusion of the potting material 8 to the effective region RN of the phase modulation element 6 and to improve the heat dissipation similarly to the above embodiment.

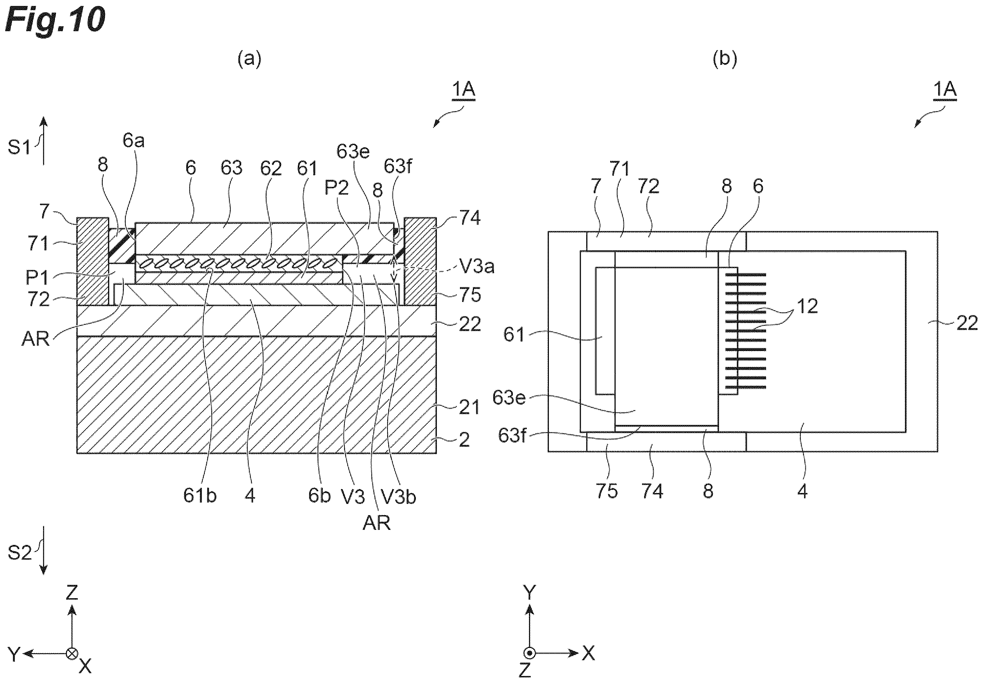

In a phase modulation module 1A of a fourth modification illustrated in FIGS. 10(a) and 10(b), the holding portion 7 does not have the top wall portion 77. In addition, the first side wall portion 72 does not have the first protruding portion 73 and only has the first side wall portion 72, and the second side wall portion 75 does not have the second protruding portion 76 and only has the second side wall portion 75. Also in the fourth modification, it is possible to suppress protrusion of the potting material 8 to the effective region RN of the phase modulation element 6 and to improve heat dissipation as follows.

That is, in the phase modulation module 1A, the cover member 63 has the protruding portion 63e protruding with respect to the circuit board 61, the potting material 8 connects the end surface 63f of the protruding portion 63e and the second holding portion 74 to each other in the second space P2, and the air AR is disposed in the overlapping portion V3 of the second space P2 overlapping the protruding portion 63e in plan view. By disposing the air AR in the second space P2 between the phase modulation element 6 and the second holding portion 74 in this manner, the air AR functions as a buffer for the potting material 8, and for example, as compared with a case where the potting material 8 is disposed in the entire second space P2, it is possible to suppress the potting material 8 from protruding to the effective region RN of the phase modulation element 6 during manufacturing, transportation, use, or the like. In particular, in the phase modulation module 1A, since the cover member 63 has the protruding portion 63e, a wide space (air reservoir) for disposing the air AR can be secured between the protruding portion 63e and the base portion 2 (first wiring substrate 4), and the protrusion of the potting material 8 to the effective region RN of the phase modulation element 6 can be effectively suppressed. Further, in the phase modulation module 1A, the edge V3b of the opening V3a of the overlapping portion V3 on the second side S2 at the position corresponding to the end surface 63f of the protruding portion 63e is located on the second side S2 with respect to the surface 61b of the circuit board 61 on the first side S1. This makes it possible to secure a wide length of the opening V3a in the Z direction. As a result, the potting material 8 easily enters the overlapping portion V3, and the protrusion of the potting material 8 into the effective region RN of the phase modulation element 6 can be more effectively suppressed. A length of the opening V3a in the Z direction is, for example, about 2 mm. In the phase modulation module 1A, the potting material 8 connects the end surface 63f of the protruding portion 63e and the second holding portion 74 to each other in the second space P2, and the air AR is disposed in the overlapping portion V3. As a result, the thermal path via the potting material 8 can be formed at the portion where the distance between the second holding portion 74 and the phase modulation element 6 is short, and the heat generated in the phase modulation element 6 can be efficiently transferred to the holding portion 7 via the potting material 8. Therefore, according to the phase modulation module 1A, protrusion of the potting material 8 to the effective region RN of the phase modulation element 6 can be suppressed, and heat dissipation can be improved.

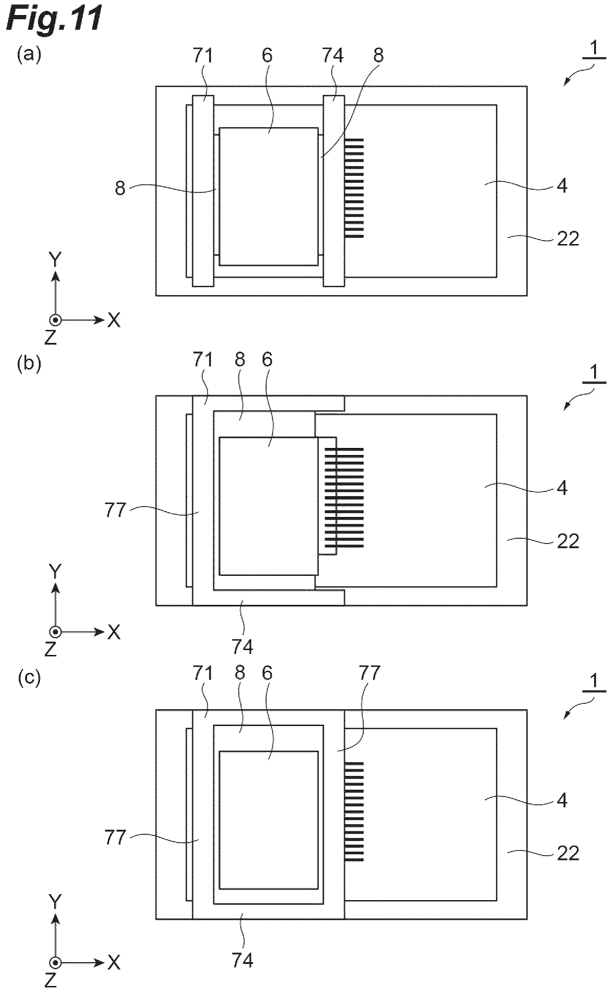

FIGS. 11(a), 11(b), and 11(c) are plan views of phase modulation modules 1 of a fifth modification, a sixth modification, and a seventh modification, respectively. The seventh modification corresponds to the phase modulation module 1 of the above embodiment. As in the fifth modification illustrated in FIG. 11(a), the first holding portion 71 and the second holding portion 74 may be disposed so as to interpose the phase modulation element 6 in the X direction. In this case, a notch or an opening for avoiding interference with the wire 12, the first wiring substrate 4, or the like may be formed in the first holding portion 71 and the second holding portion 74. As in the sixth modification illustrated in FIG. 11(b), in the above embodiment, the first holding portion 71 and the second holding portion 74 may be connected by the top wall portion 77 extending along the Y direction. In the sixth modification, the holding portion 7 is formed in a substantially U-shape (U-shape) in plan view. As in the seventh modification illustrated in FIG. 11(c), in the above embodiment, the first holding portion 71 and the second holding portion 74 may be connected by a pair of top wall portions 77 extending along the Y direction. In the seventh modification, the holding portion 7 is formed in a rectangular frame shape in plan view.

The present disclosure is not limited to the above embodiment and modifications. In the above-described example, the description of first and second in the name of the member is for convenience and may be appropriately replaced. For example, the first holding portion 71 may be replaced with the second holding portion, and the second holding portion 74 may be replaced with the first holding portion. The material and shape of each configuration are not limited to the material and shape described above, and various materials and shapes can be employed.

It is sufficient that the air AR is disposed in at least a part of the overlapping portion V1, and the arrangement of the air AR and the potting material 8 in the overlapping portion V1 is not limited to the above-described example. The same applies to the overlapping portions V2, V3, and V4. For example, the potting material 8 may be in contact with the base wall portion 22 (base portion 2). The air AR does not have to be in contact with the side surface (the first side surface 6a or the second side surface 6b) of the phase modulation element 6. The air AR does not have to be in contact with the first side wall portion 72 or the second side wall portion 75. In the first space P1 or the second space P2, the volume of the air AR may be equal to or smaller than the volume of the potting material 8. The thermal conductivity of the potting material 8 may be smaller than 0.5 W/(m·K). On the surface 63b of the cover member 63, the potting material 8 may be in contact with the surface 63b as long as it is a region other than the effective region RN (outer peripheral non-effective region).

The cover member 63 may be a diamond substrate formed of diamond. Also in this case, the thermal conductivity of the cover member 63 can be increased. The cover member 63 may be formed of a material (for example, quartz) other than sapphire and diamond. The first wiring substrate 4 is not limited to the ceramic substrate, and may be, for example, a flexible circuit board. The first wiring substrate 4 may be omitted. In this case, the circuit board 61 (phase modulation element 6) may be directly disposed on the base wall portion 22. The first wiring substrate 4 may be disposed on the base wall portion 22 such that at least a part thereof is located between the first side wall portion 72 and the second side wall portion 75 in plan view, or may be disposed outside the first side wall portion 72 and the second side wall portion 75 in plan view. The second wiring substrate 5 may be omitted.

The base portion 2 does not necessarily have to include the heat sink 21, and may be configured only by the base wall portion 22, for example. The surface 63b of the cover member 63 on the first side S1 may be located on the second side S2 with respect to the surface 77a of the top wall portion 77 on the first side S 1, or may be located on the same plane as the surface 77a of the top wall portion 77. The holding portion 7 does not have to include at least one of the first opening 91 and the second opening 92, and may further have, for example, a side wall portion facing the third side surface 6c of the phase modulation element 6 and a side wall portion facing the fourth side surface 6d of the phase modulation element 6. That is, the holding portion 7 may have a side wall portion formed in a frame shape so as to surround the phase modulation element 6. The holding portion 7 may be formed of a material other than metal.

The distance D1 between the end surface 73a of the first protruding portion 73 and the phase modulation element 6 and the distance D2 between the end surface 76a of the second protruding portion 76 and the phase modulation element 6 may be equal to or more than the thickness T of the cover member 63. The housing portion 3 may be omitted. The edge 33a of the opening 33 formed in the top wall portion 32 of the housing portion 3 may coincide with the outer edge 63a of the cover member 63 in plan view, or may be located outside the outer edge 63a. The temperature monitoring element 42 may be omitted. At least one of the recessed portions 81 and 82 may be omitted. The connection member 41 may be omitted.

In the above embodiment, the opening 78 which is a hole is formed in the top wall portion 77, and the entire periphery of the opening 78 is surrounded by the top wall portion 77, but the opening 78 formed in the top wall portion 77 may be a notch. For example, the top wall portion 77 may be formed in a substantially U-shape (U-shape) in plan view, and the opening 78 may be opened laterally at one side portion (for example, a side portion on one side in the X direction) of the top wall portion 77 (for example, the sixth modification of FIG. 11(b)). It is sufficient that at least a part of the end surface 73a of the first protruding portion 73 faces the phase modulation element 6, and only a part of the end surface 73a may face the phase modulation element 6. It is sufficient that at least a part of the end surface 76a of the second protruding portion 76 faces the phase modulation element 6, and only a part of the end surface 76a may face the phase modulation element 6. The end surfaces 73a and 76a may be, for example, inclined surfaces inclined with respect to the Z direction.

### Reference Signs List

1, 1A: Phase modulation module, 2: Base portion, 6: Phase modulation element, 6a: First side surface, 6b: Second side surface, 61: Circuit board, 61b: Surface, 62: Liquid crystal layer, 63: Cover member, 63e: Protruding portion, 63f: End surface, 63g: Protruding portion, 63h: End surface, 71: First holding portion, 72: First side wall portion, 73: First protruding portion, 73a: End surface, 74: Second holding portion, 75: Second side wall portion, 76: Second protruding portion, 76a: End surface, 77: Top wall portion, 78: Opening, 8: Potting material, AR: Air, P1: First space, P2: Second space, S1: First side, S2: Second side, V1, V2, V3, V4: Overlapping portion, V1a, V2a, V3a: Opening, V1b, V2b, V3b: Edge

## Claims

1. A phase modulation module comprising:
a base portion;
a reflection-type phase modulation element disposed on the base portion;
a first holding portion and a second holding portion disposed on the base portion such that the phase modulation element is located between the first holding portion and the second holding portion when viewed from a predetermined direction; and
a potting material that connects the phase modulation element and the first holding portion to each other and connects the phase modulation element and the second holding portion to each other, wherein
when a side on which the phase modulation element is located with respect to the base portion in the predetermined direction is defined as a first side and a side opposite to the first side is defined as a second side, the phase modulation element includes:
a circuit board disposed on the base portion,
a liquid crystal layer disposed on the first side with respect to the circuit board, and
a cover member formed of a light transmissive material in a plate shape and disposed on the first side with respect to the liquid crystal layer,
the first holding portion includes a first side wall portion facing a first side surface of the phase modulation element, and a first protruding portion extending from the first side wall portion toward the phase modulation element,
the second holding portion includes a second side wall portion facing a second side surface opposite to the first side surface of the phase modulation element,
an end surface of the first protruding portion faces the phase modulation element,
the potting material connects the end surface of the first protruding portion and the first side surface to each other in a first space formed by the first side surface of the phase modulation element and the first side wall portion and the first protruding portion of the first holding portion, and
air is disposed in at least a part of a portion of the first space overlapping the first protruding portion when viewed from the predetermined direction.

2. A phase modulation module comprising:
a base portion;
a reflection-type phase modulation element disposed on the base portion;
a first holding portion and a second holding portion disposed on the base portion such that the phase modulation element is located between the first holding portion and the second holding portion when viewed from a predetermined direction; and
a potting material that connects the phase modulation element and the first holding portion to each other and connects the phase modulation element and the second holding portion to each other, wherein
when a side on which the phase modulation element is located with respect to the base portion in the predetermined direction is defined as a first side and a side opposite to the first side is defined as a second side, the phase modulation element includes:
a circuit board disposed on the base portion,
a liquid crystal layer disposed on the first side with respect to the circuit board, and
a cover member formed of a light transmissive material in a plate shape and disposed on the first side with respect to the liquid crystal layer,
the first holding portion includes a first side wall portion facing a first side surface of the phase modulation element,
the second holding portion includes a second side wall portion facing a second side surface opposite to the first side surface of the phase modulation element,
the cover member includes a first protruding portion protruding with respect to the circuit board when viewed from the predetermined direction,
an end surface of the first protruding portion faces the first holding portion,
the potting material connects the end surface of the first protruding portion and the first holding portion to each other in a first space formed by the first side surface of the phase modulation element and the first side wall portion of the first holding portion,
air is disposed in at least a part of an overlapping portion of the first space overlapping the first protruding portion when viewed from the predetermined direction, and
an edge of an opening of the overlapping portion on the second side at a position corresponding to the end surface of the first protruding portion is located on the second side with respect to a surface of the circuit board on the first side.

3. The phase modulation module according to claim 1 or 2, wherein the potting material is separated from the base portion by the air being disposed between the potting material and the base portion.

4. The phase modulation module according to any one of claims 1 to 3, wherein the air is in contact with the first side surface of the phase modulation element and the first side wall portion of the first holding portion.

5. The phase modulation module according to any one of claims 1 to 4, wherein a thermal conductivity of the potting material is 0.5 W/(m·K) or more.

6. The phase modulation module according to any one of claims 1 to 5, wherein the first holding portion and the second holding portion are formed of a metal material.

7. The phase modulation module according to any one of claims 1 to 6, wherein the first holding portion and the second holding portion are connected to each other by a top wall portion defining an opening overlapping at least a part of the phase modulation element when viewed from the predetermined direction.

8. The phase modulation module according to any one of claims 1 to 7, wherein the potting material is in contact with at least the circuit board in the first space.

9. The phase modulation module according to any one of claims 1 to 8, wherein in the first space, a volume of the air is larger than a volume of the potting material.

10. The phase modulation module according to claim 1, wherein
the second holding portion further includes a second protruding portion extending from the second side wall portion toward the phase modulation element,
an end surface of the second protruding portion faces the phase modulation element,
the potting material connects the end surface of the second protruding portion and the second side surface to each other in a second space formed by the second side surface of the phase modulation element and the second side wall portion and the second protruding portion of the second holding portion, and
air is disposed in at least a part of a portion of the second space overlapping the second protruding portion when viewed from the predetermined direction.

11. The phase modulation module according to claim 1 or 10, wherein
the cover member has a protruding portion protruding with respect to the circuit board when viewed from the predetermined direction,
an end surface of the protruding portion of the cover member faces the first holding portion, and
the potting material connects the end surface of the first protruding portion and the end surface of the protruding portion of the cover member to each other in the first space.

12. The phase modulation module according to claim 1, 10, or 11, wherein when a portion of the first space overlapping the first protruding portion when viewed from the predetermined direction is an overlapping portion, an edge of an opening of the overlapping portion on the second side at a position corresponding to the end surface of the first protruding portion is located on the second side with respect to a surface of the circuit board on the first side.

13. The phase modulation module according to claim 2, wherein
the cover member further includes a second protruding portion protruding with respect to the circuit board when viewed from the predetermined direction,
an end surface of the second protruding portion faces the second holding portion,
the potting material connects the end surface of the second protruding portion and the second holding portion to each other in a second space formed by the second side surface of the phase modulation element and the second side wall portion of the second holding portion, and
air is disposed in at least a part of a portion of the second space overlapping the second protruding portion when viewed from the predetermined direction.

14. The phase modulation module according to claim 2 or 13, wherein
the first holding portion further includes a protruding portion extending from the first side wall portion toward the phase modulation element,
an end surface of the protruding portion of the first holding portion faces the phase modulation element, and
the potting material connects the end surface of the first protruding portion and the end surface of the protruding portion of the first holding portion to each other in the first space.

15. The phase modulation module according to claim 2, 13, or 14, wherein a length of the opening of the overlapping portion in the predetermined direction is 1/2 or more of a maximum length of the overlapping portion in the predetermined direction.
